# EUROPEAN PATENT SPECIFICATION

(11) **EP 3 509 062 B1**
(45) Date of publication and mention of the grant of the patent: **27.05.2020**
(21) Application number: 17846146.3
(22) Date of filing: 17.08.2017
(51) Int. Cl.: G10L 15/28, G10L 15/04, G10L 15/22, G10L 25/78, G10L 15/08, G10L 15/30

(54) **AUDIO RECOGNITION DEVICE, AUDIO RECOGNITION METHOD, AND PROGRAM**
AUDIOSIGNALERKENNER, AUDIOSIGNALERKENNUNGSVERFAHREN UND PROGRAMM
DISPOSITIF, PROCÉDÉ ET PROGRAMME DE RECONNAISSANCE AUDIO

(30) Priority: 31.08.2016 JP 2016170307
(43) Date of publication of application: 10.07.2019
(73) Proprietor: Sony Corporation, Tokyo 108-0075 (JP)
(72) Inventor: KAWANO Shinichi, Tokyo 108-0075 (JP); TAKI Yuhei, Tokyo 108-0075 (JP)
(74) Representative: MFG Patentanwälte Meyer-Wildhagen Meggle-Freund Gerhard PartG mbB
(86) International application number: PCT/JP2017/029492
(87) International publication number: WO 2018/043138

(56) References cited:
- EP-A2- 1 012 827
- JP-A- S6 048 099
- JP-A- 2003 295 884
- US-A- 4 624 008
- US-A- 4 870 686
- US-A- 5 794 196

## Description

### TECHNICAL FIELD

The present invention relates to an audio recognition apparatus, an audio recognition method, and a program thereof.

### BACKGROUND ART

In recent years, utilization of a user interface using audio input has been widespread, and it is important to realize audio recognition processing that enables more preferable audio input.

Generally, in the audio recognition processing, processing of extracting a feature amount with respect to audio information is performed, and feature amounts such as mel-frequency cepstrum coefficients (MFCC) are extracted, for example. Then, on the basis of the feature amount extracted from the audio information, an audio recognition engine performs audio recognition processing with reference to an acoustic model, a recognition dictionary, and a language model, and a character string recognized from the audio is output.

For example, Patent Document 1 discloses an audio recognition system that selects an acoustic model to be used for audio recognition on the basis of a user's classification in audio recognition targeting an unspecified number of users. Patent Document 2 discloses a system and method for speech recognition, wherein isolated and continuous speech recognizers are provided in parallel, in order to allow the user to input spoken commands/words in either way, i.e. spoken in isolation and/or continuously.

### CITATION LIST

### PATENT DOCUMENT

Patent Document 1: Japanese Patent Application Laid-Open No. 2000-347684
Patent Document 2: US5794196, G. Yegnanarayanan et al., "Speech Recognition system Distinguishing Dictation from Commands by Arbitration between Continuous Speech and Isolated Word Modules", 11.08.1998.

### SUMMARY OF THE INVENTION

### PROBLEMS TO BE SOLVED BY THE INVENTION

By the way, in applications for inputting messages in game chat, live distribution platform, or the like, not only sentences with normal words and phrases but also a special character string that is not listed in a recognition dictionary such as identification (ID), abbreviations, proper nouns, or net slang may be input. It is difficult to accurately perform audio recognition processing on such a special character string, and it is difficult to perform preferable audio input.

The present invention has been made in view of such a situation, and it is intended to make it possible to perform more preferable audio input.

### SOLUTIONS TO PROBLEMS

An audio recognition apparatus of an aspect of the present disclosure includes: a speech feature detection unit that acquires audio information obtained by a speech of a user and detects a feature of the speech from the audio information; a specific silent period detection unit that detects a specific silent period that is a specific short silent period not determined as a silent period in processing of detecting a speech section in which the audio information includes audio; a selection unit that selects audio recognition processing to be performed on the audio information on the basis of the feature of the speech that has been detected from the audio information by the speech feature detection unit, and the specific silent period that has been detected from the audio information by the specific silent period detection unit; and an output processing unit that outputs, along with an audio recognition result obtained by recognition in the audio recognition processing that has been selected by the selection unit, an audio recognition result information indicating the audio recognition processing in which the audio recognition result has been obtained.

An audio recognition method or a program of an aspect of the present disclosure includes steps of: acquiring audio information obtained by a speech of a user and detecting a feature of the speech from the audio information; detecting a specific silent period that is a specific short silent period not determined as a silent period in processing of detecting a speech section in which the audio information includes audio; selecting audio recognition processing to be performed on the audio information on the basis of the feature of the speech that has been detected from the audio information, and the specific silent period that has been detected from the audio information; and outputting, along with an audio recognition result obtained by recognition in the audio recognition processing that has been selected, an audio recognition result information indicating the audio recognition processing in which the audio recognition result has been obtained.

In one aspect of the present disclosure, in the processing of acquiring the audio information obtained by the speech of the user, detecting the feature of the speech from voice information, and detecting the speech section in which the audio information includes audio, a specific silent period that is a specific short silent period not determined as a silent period is detected. Then, on the basis of the feature of the speech that has been detected from the audio information and the specific silent period that has been detected from the audio information, the audio recognition processing to be performed on the audio information is selected, and along with the audio recognition result obtained by recognition in the audio recognition processing, the audio recognition result information indicating that the audio recognition processing has been performed is output.

### EFFECTS OF THE INVENTION

According to one aspect of the present disclosure, more preferable audio input can be performed.

### BRIEF DESCRIPTION OF DRAWINGS

Fig. 1 is a block diagram showing a configuration example of an audio recognition system according to an embodiment to which the present technology is applied.
Fig. 2 is a block diagram showing a configuration example of an audio recognition server.
Fig. 3 is a diagram showing an example of a character string number conversion table.
Fig. 4 is a diagram showing an example of a basic user interface of audio recognition processing.
Fig. 5 is a diagram for explaining comparison of audio levels.
Fig. 6 is a diagram showing an example of a user interface in audio recognition processing of a normal mode.
Fig. 7 is a diagram for explaining comparison of audio levels and detection of a specific silent period.
Fig. 8 is a diagram showing an example of a user interface in a one-character mode and an uppercase conversion mode.
Fig. 9 is a diagram showing an example of an audio recognition result.
Fig. 10 is a diagram for explaining comparison of audio levels and detection of the specific silent period.
Fig. 11 is a diagram showing an example of a user interface in a one-character mode and a number conversion mode.
Fig. 12 is a diagram showing an example of the audio recognition result.
Fig. 13 is a flowchart explaining audio recognition processing.
Fig. 14 is a diagram showing an example of a user interface in audio recognition processing for Japanese.
Fig. 15 is a diagram showing an example of an API for realizing the audio recognition processing.
Fig. 16 is a diagram showing an example of emphasizing and displaying the audio recognition result.
Fig. 17 is a diagram showing another example of emphasizing and displaying the audio recognition result.
Fig. 18 is a block diagram showing a configuration example of an embodiment of a computer to which the present technology is applied.

### MODE FOR CARRYING OUT THE INVENTION

Specific embodiments to which the present technology is applied will be described in detail below with reference to the drawings.

### <Configuration example of audio recognition system>

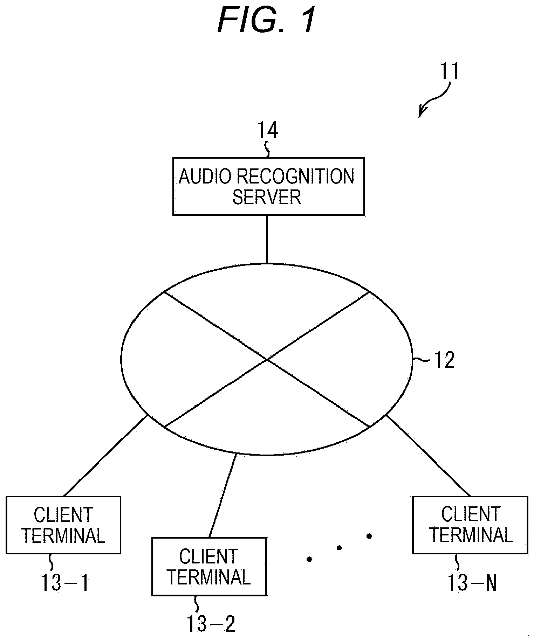

Fig. 1 is a block diagram showing a configuration example of an audio recognition system according to an embodiment to which the present technology is applied.

As shown in Fig. 1, a plurality of (N in the example of Fig. 1) client terminals 13-1 to 13-N and an audio recognition server 14 are connected to an audio recognition system 11 via a network 12 such as the Internet. Note that the client terminals 13-1 to 13-N are configured similarly to each other, and hereinafter, are referred to as a client terminal 13 as appropriate in a case where there is no need to distinguish each other.

The client terminal 13 is provided with an audio information acquisition device such as a microphone for inputting audio given by a speech of a user and acquiring audio information, and transmits the audio information acquired by the audio information acquisition device to the audio recognition server 14 via the network 12. Furthermore, the client terminal 13 receives the audio recognition result transmitted from the audio recognition server 14 and presents the result to the user. For example, the client terminal 13 causes a video output device to display a user interface representing an audio recognition result, and outputs synthesized audio representing the audio recognition result from the audio output device.

The audio recognition server 14 performs audio recognition processing on the audio information transmitted from the client terminal 13 via the network 12. Then, the audio recognition server 14 transmits a word string or the like recognized from the audio information as the audio recognition result to the client terminal 13 via the network 12. At this time, the audio recognition server 14 can transmit the audio recognition result not only to the client terminal 13 that has transmitted the audio information, but also to, for example, the client terminal 13 of another user who is communicating with the user of the client terminal 13.

The audio recognition system 11 is configured as described above, the audio information obtained by the speech of the user of the client terminal 13 is transmitted to the audio recognition server 14, audio recognition processing is performed in the audio recognition server 14, and the audio recognition result is transmitted to the client terminal 13. Therefore, for example, the latest higher-performance audio recognition processing is implemented in the audio recognition server 14, so that the audio recognition system 11 can provide audio recognition processing that enables more preferable audio input even if the processing capability of each client terminal 13 is low.

### <First configuration example of audio recognition server>

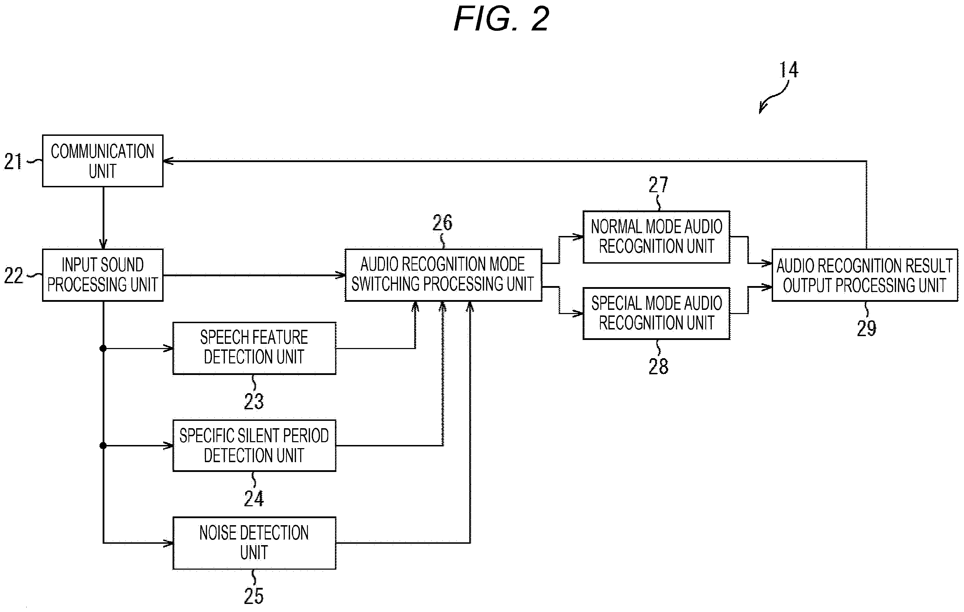

Fig. 2 is a block diagram showing a first configuration example of the audio recognition server 14.

As shown in Fig. 2, the audio recognition server 14 includes a communication unit 21, an input sound processing unit 22, a speech feature detection unit 23, a specific silent period detection unit 24, a noise detection unit 25, an audio recognition mode switching processing unit 26, a normal mode audio recognition unit 27, a special mode audio recognition unit 28, and an audio recognition result output processing unit 29.

The communication unit 21 performs various types of communication with the client terminal 13 via the network 12 in Fig. 1. For example, the communication unit 21 receives the audio information transmitted from the client terminal 13 and supplies the audio information to the input sound processing unit 22. Furthermore, the communication unit 21 transmits the audio recognition result information supplied from the audio recognition result output processing unit 27 to the client terminal 13.

The input sound processing unit 22 performs various preprocessing necessary before the audio recognition is performed in the normal mode audio recognition unit 27 and the special mode audio recognition unit 28, with respect to the audio information supplied from the communication unit 21. For example, the input sound processing unit 22 excludes a section that is silent in the audio information and a section that includes only noise, performs voice activity detection (VAD) processing for detecting the speech section including audio given by a speech from audio information, and acquires the audio information of the speech section. Then, the input sound processing unit 22 supplies the audio information of the speech section to the speech feature detection unit 23, the specific silent period detection unit 24, the noise detection unit 25, and the audio recognition mode switching processing unit 26.

The speech feature detection unit 23 detects the feature of the speech of the user from the audio information of the speech section supplied from the input sound processing unit 22 and supplies the speech feature detection result indicating the feature of the detected speech to the audio recognition mode switching processing unit 26.

For example, the speech feature detection unit 23 detects the audio level of the audio based on the audio information as a feature of a speech, and sets a result of comparison between the audio level of the audio based on the audio information and the preset audio level at the normal time as a speech feature detection result. Furthermore, for example, the speech feature detection unit 23 detects the input speed of the audio based on the audio information as a feature of the speech, and sets the comparison result obtained by relatively comparing with the input speed of the audio until then (becomes faster or slower than the speed until then) as the speech feature detection result. Furthermore, for example, the speech feature detection unit 23 detects the frequency of the audio based on the audio information as a feature of the speech, and sets the comparison result obtained by relatively comparing with the frequency of the audio until then (becomes higher or lower than the frequency until then) as the speech feature detection result.

The specific silent period detection unit 24 detects an extremely short silent period that is not determined as a silent period as a specific silent period in the VAD processing in which the input sound processing unit 22 detects the speech section from the audio information from the audio information of the speech section supplied from the input sound processing unit 22. For example, the specific silent period is a short silent period occurring at the end of speech of each alphabet when speech of alphabets is performed one character by one character, which is called so-called an interval. Then, the specific silent period detection unit 24 supplies the specific silent period detection result indicating the timing and the interval at which the specific silent period has been detected from the audio information of the speech section, to the audio recognition mode switching processing unit 26.

The noise detection unit 25 detects the audio level of the noise included in the audio information of the speech section supplied from the input sound processing unit 22 and supplies the audio level of the detected noise to the audio recognition mode switching processing unit 26.

The audio recognition mode switching processing unit 26 performs processing of switching audio recognition processing on the basis of the speech feature detection result supplied from the speech feature detection unit 23, the specific silent period detection result supplied from the specific silent period detection unit 24, and the audio level of the noise supplied from the noise detection unit 25.

For example, in a case where the audio level of the audio based on the audio information is lower than the audio level at the normal time on the basis of the speech feature detection result, the audio recognition mode switching processing unit 26 selects the audio recognition processing of the normal mode. On the other hand, in a case where the audio level of the speech based on the audio information is higher than the audio level at the normal time on the basis of the speech feature detection result, and the specific silent period is repeatedly detected at predetermined intervals on the basis of the specific silent period detection result, the audio recognition mode switching processing unit 26 considers that the condition for performing the audio recognition processing of the special mode has occurred, and selects the audio recognition processing of the special mode.

Furthermore, in a case where the input speed of the audio based on the audio information is relatively slower, and also in a case where the frequency of the audio based on the audio information is relatively high, on the basis of the speech feature detection result, the audio recognition mode switching processing unit 26 considers that the condition for performing the audio recognition processing of the special mode has occurred, and selects the audio recognition processing of the special mode, as similar to the case where the audio level of the audio based on the audio information is higher than the audio level at the normal time.

Here, for example, in a case where a user speaks to repeat a short speech and an interval after an interval at a volume larger than normal, it can be considered that the input of the audio of one character by one character such as inputting of ID is being performed. Therefore, in this case, it is preferable that the audio recognition mode switching processing unit 26 selects the special mode audio recognition processing for performing audio recognition of one character by one character as described above.

Moreover, in a case where the audio level of the noise exceeds the preset predetermined audio level, the audio recognition mode switching processing unit 26 avoids the selection of audio recognition processing of the special mode. In other words, in a case where the noise is large, it is considered that the recognition accuracy of the audio recognition processing of the special mode is deteriorated, so that it is preferable that the audio recognition processing of the special mode is not selected.

Then, in a case where the audio recognition processing of the normal mode is selected, the audio recognition mode switching processing unit 26 supplies the audio information of the speech section supplied from the input sound processing unit 22 to the normal mode audio recognition unit 27. On the other hand, in a case where the audio recognition processing of the special mode is selected, the audio recognition mode switching processing unit 26 supplies the audio information of the speech section supplied from the input sound processing unit 22 to the special mode audio recognition unit 28.

For example, the normal mode audio recognition unit 27 refers to a general recognition dictionary and performs audio recognition processing on audio information supplied from the audio recognition mode switching processing unit 26, as similar to the conventional case. Then, the normal mode audio recognition unit 27 supplies, for example, a character string recognized from the audio information to the audio recognition result output processing unit 29 as an audio recognition result.

The special mode audio recognition unit 28 performs audio recognition processing of the special mode for recognizing special character strings such as ID, abbreviation, proper noun, or net slang (hereinafter referred to as special characters as appropriate) from the audio information supplied from the audio recognition mode switching processing unit 26. Examples of the audio recognition processing of the special mode include a one-character mode for performing audio recognition of one character by one character, an uppercase conversion mode for converting the audio recognition result to uppercase letters of the alphabet, a number conversion mode for converting words of the audio recognition result into numbers, and the like.

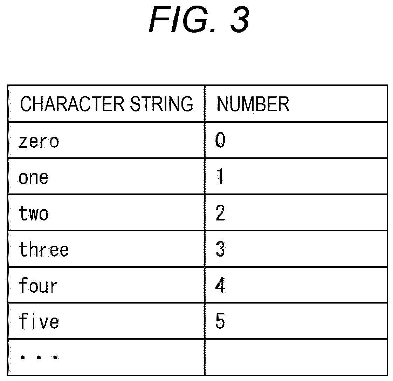

For example, in a case where the specific silent period is repeatedly detected at predetermined intervals, the special mode audio recognition unit 28 considers that input of the audio of one character by one character such as input of an ID is being performed, and performs the audio recognition processing of the special mode in the one-character mode. Furthermore, in a case where the audio level of the audio based on the audio information exceeds the audio level at the normal time in the one-character mode, the special mode audio recognition unit 28 performs the audio recognition processing of the special mode in the uppercase conversion mode for converting the recognized one character to an uppercase letter of the alphabet. Furthermore, in a case where the special mode audio recognition unit 28 refers to the character string number conversion table as shown in Fig. 3, and the word recognized by the audio recognition is registered in the character string number conversion table, the special mode audio recognition unit 28 performs the audio recognition processing of the special mode in the number conversion mode for converting the recognized word into a number.

The audio recognition result output processing unit 29 generates the audio recognition result information indicating the audio recognition processing in which the audio recognition result is obtained, and supplies to the communication unit 21, the audio recognition result and the information along with the audio recognition result supplied from the normal mode audio recognition unit 27 or the special mode audio recognition unit 28. For example, the audio recognition result output processing unit 29 generates as audio recognition result information, display information for causing the user interface that causes the user of the client terminal 13 to recognize that the audio recognition result and the audio recognition processing to be displayed, synthesized audio information for output of synthesized audio for recognition of the audio recognition result and the audio recognition processing, or the like.

The audio recognition server 14 is configured in this way, and can perform any of audio recognition processing by switching the audio recognition processing of the normal mode or the audio recognition processing of the special mode, with respect to the audio information transmitted from the client terminal 13 via the network 12. Then, the audio recognition server 14 can transmit the audio recognition result information obtained by performing the audio recognition processing to the client terminal 13 via the network 12, and can present, along with the audio recognition result, the audio recognition processing in which the audio recognition result has been obtained, to the user.

Therefore, the audio recognition server 14 can recognize, for example, a special character that cannot be recognized by simply referring to a general recognition dictionary, by the audio recognition processing of the special mode, and provide more preferable audio input.

For example, conventionally, performing audio recognition on special characters not listed in a recognition dictionary such as IDs, abbreviations, proper nouns, or net slang is more difficult due to a technical characteristic of audio recognition (characteristic of recognizing by using a recognition dictionary in which phrases are registered). Furthermore, such special characters are often changed in the expression method depending on the usage scene or the like and it is not realistic to register all the special characters in the recognition dictionary.

Specifically, the abbreviation "lol" is sometimes used for the English phrase "laughing out loud", and as the pronunciation of the abbreviation "lol", the letters are read one character by one character, "L, O, L", in some cases, or the "lol" is pronounced as one word in some cases. Moreover, the notation may change due to differences in nuances such as "LOLOLOLOL", "lolz" "lul", or the like as a variation (notation differences) of the abbreviation "lol". In addition to this example, similar abbreviations may be used, and it is extremely difficult to reflect all of them in the dictionary. Moreover, since IDs, abbreviations, proper nouns, net slang, or the like increase daily, it is considered that the cost is too high for reflecting them in the dictionary. Furthermore, words that are used only by members of a specific group of a social network and the like are not usually reflected in the recognition dictionary.

On the other hand, when a condition for performing the above-described audio recognition processing of the special mode occurs, the special mode audio recognition unit 28 performs the audio recognition processing of the special mode, so that the audio recognition server 14 can perform audio recognition on special characters more accurately than in the conventional case. As a result, the audio recognition server 14 can provide more preferable audio input by appropriately selecting the audio recognition processing even in a case where the normal conversation and the speech with the special characters coexist.

### <Audio recognition processing of audio recognition system>

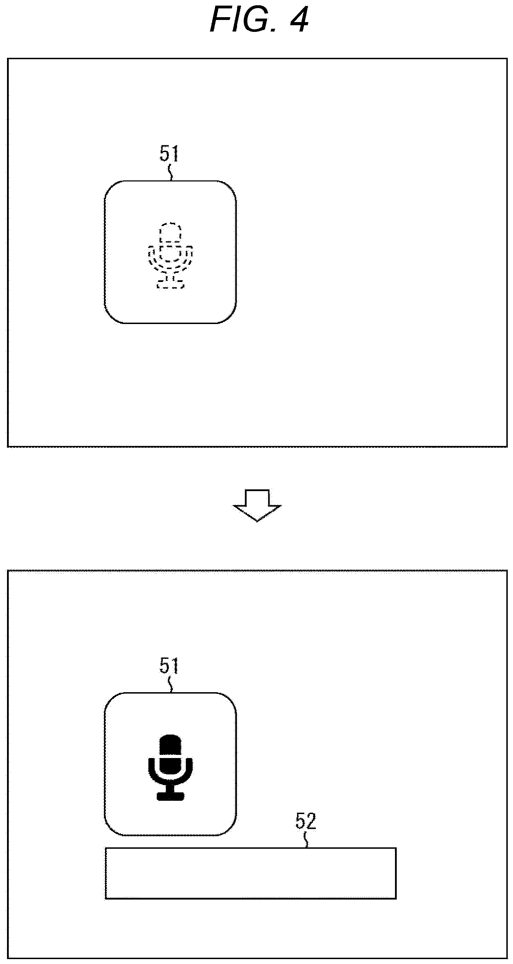

The audio recognition processing provided by the audio recognition system 11 will be described with reference to Figs. 4 to 12.

Here, in Figs. 4 to 12, description will be given of the audio recognition processing performed in the audio recognition server 14 with respect to the audio information, "Let's start this battle BTX505", spoken by the user of the client terminal 13.

For example, on the screen of the video output device of the client terminal 13, an icon 51 representing the speech state of the user is displayed. When the speech of the user is not detected, as shown in the upper part of Fig. 4, a microphone in the icon 51 is displayed lightly (by broken line in the example of Fig. 4). Then, when the audio information acquisition device of the client terminal 13 detects the speech of the user, as shown in the lower part of Fig. 4, the display of the microphone in the icon 51 is changed to be dark, a display field 52 for displaying the recognized characters from the speech by the user is displayed below the icon 51.

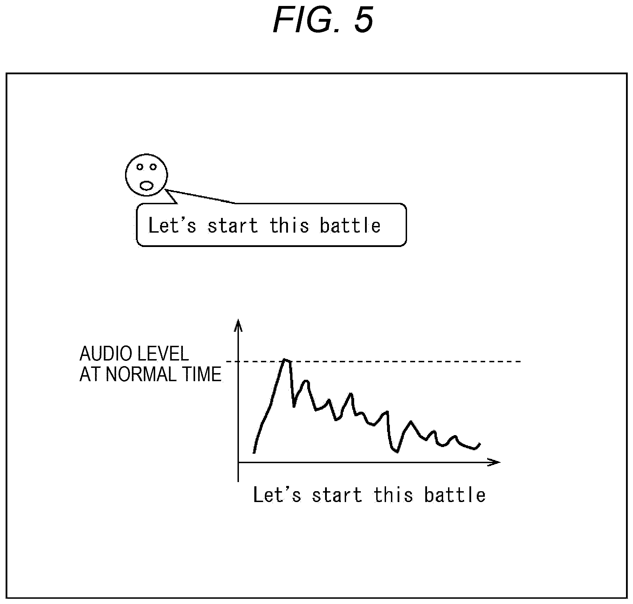

Fig. 5 shows a state in which the audio information up to "Let's start this battle" in the audio information "Let's start this battle BTX505" is supplied to the audio recognition server 14. First, the speech feature detection unit 23 of the audio recognition server 14 compares the audio level as processing of detecting the speech feature from the audio information "Let's start this battle". In the example of Fig. 5, the audio level of the audio information "Let's start this battle" is equal to or lower than the audio level at the normal time, and the speech feature detection unit 23 supplies the speech feature detection result indicating that the audio level is equal to or lower than the audio level at the normal time, to the audio recognition mode switching processing unit 26.

Then, the audio recognition mode switching processing unit 26 determines that the audio recognition with respect to the audio information "Let's start this battle" is performed in the normal mode, in accordance with the speech feature detection result that the audio level of the audio information "Let's start this battle" is equal to or lower than the audio level at the normal mode. On the basis of this, the audio recognition mode switching processing unit 26 supplies the audio information "Let's start this battle" to the normal mode audio recognition unit 27, and the normal mode audio recognition unit 27 performs audio recognition processing of the normal mode.

For example, the normal mode audio recognition unit 27 supplies the character string "Let's start this battle" to the audio recognition result output processing unit 29 as the audio recognition result of the audio recognition processing of the normal mode. Therefore, the audio recognition result output processing unit 29 generates audio recognition result information for outputting the user interface that causes the user of the client terminal 13 to recognize that the audio recognition result "Let's start this battle" has been obtained, and supplies the audio recognition result information to the communication unit 21.

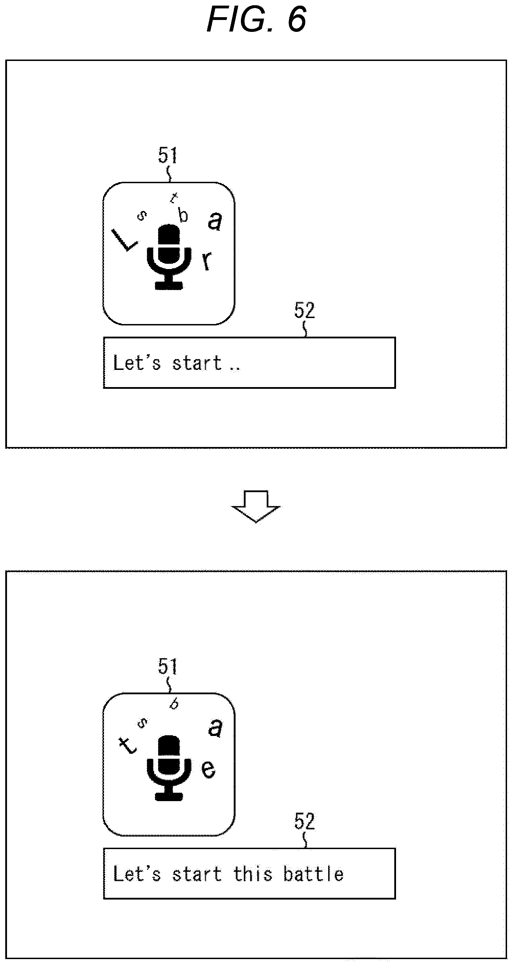

As a result, the client terminal 13 displays the user interface based on the audio recognition result obtained by the audio recognition processing of the normal mode. For example, as shown in Fig. 6, a user interface is displayed for dynamical display in which the audio recognition results in the midst of recognition by the audio recognition processing of the normal mode appears around the microphone of the icon 51. Furthermore, words in the midst of recognition by the audio recognition processing of the normal mode are sequentially displayed on the display field 52. In other words, as shown in the upper side of Fig. 6, the audio recognition result "Let's start..." in the midst of recognition is displayed in the display field 52. Then, when all the audio recognition with respect to the audio information "Let's start this battle" is completed, the audio recognition result "Let's start this battle" is displayed in the display field 52 as shown in the lower side of Fig. 6.

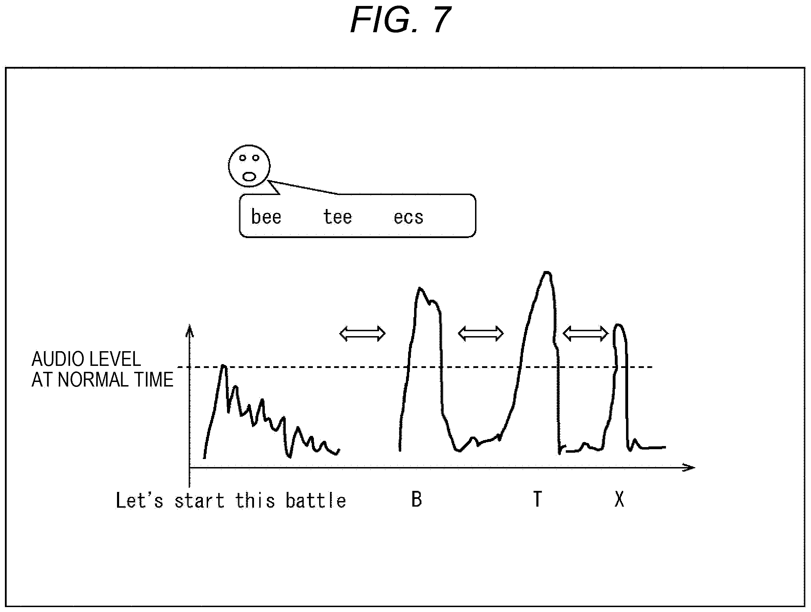

Next, Fig. 7 shows a state in which the audio information up to the audio information "BTX" subsequent to the audio information "Let's start this battle" in the audio information "Let's start this battle BTX505" is supplied to the audio recognition server 14. Note that, in a case where the audio recognition processing in the normal mode is performed on the audio information "BTX", the audio recognition result "bee tee ecs" is obtained as shown in the drawing.

First, the speech feature detection unit 23 compares the audio levels as processing of detecting the speech feature from the audio information "BTX". In the example of Fig. 7, the audio level of the audio information "BTX" exceeds the audio level at the normal time, and the speech feature detection unit 23 supplies the speech feature detection result indicating that the audio level exceeds the audio level at the normal time, to the audio recognition mode switching processing unit 26.

Furthermore, the specific silent period detection unit 24 performs processing of detecting a specific silent period from the audio information "BTX". In the example of Fig. 7, the period shown by a while arrow is detected as the specific silent period, and the specific silent period detection unit 24 supplies the specific silent period detection result indicating the timing and the interval at which the specific silent period has been detected, to the audio recognition mode switching processing unit 26.

Then, the audio recognition mode switching processing unit 26 determines whether or not the audio recognition processing of the special mode is performed on the basis of the speech feature detection result supplied from the speech feature detection unit 23, and the specific silent period detection result supplied from the specific silent period detection unit 24. In the example shown in Fig. 7, the audio recognition mode switching processing unit 26 determines that the audio recognition processing of the special mode is performed on the basis of the fact that the audio level exceeds the audio level at the normal time, and the specific silent period is detected at predetermined timings and intervals.

Therefore, the audio recognition mode switching processing unit 26 supplies the audio information "BTX" to the special mode audio recognition unit 28, and the special mode audio recognition unit 28 performs audio recognition processing of the special mode.

For example, the special mode audio recognition unit 28 supplies an alphabet of capital letters "BTX" to the audio recognition result output processing unit 29 as the audio recognition result obtained by performing the audio recognition processing of the special mode (one-character mode and uppercase conversion mode). Therefore, the audio recognition result output processing unit 29 generates audio recognition result information for outputting the user interface that causes the user of the client terminal 13 to recognize that the audio recognition result of the uppercase alphabets "BTX" has been obtained, and supplies the audio recognition result information to the communication unit 21.

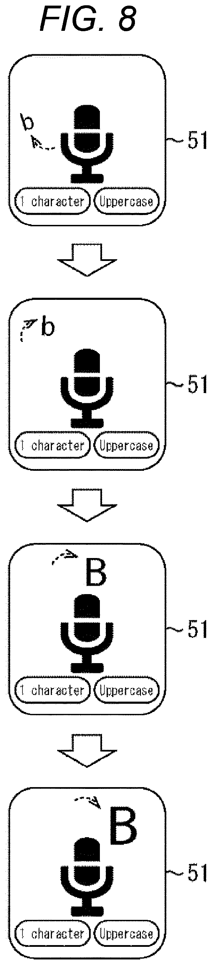

As a result, the client terminal 13 displays the user interface based on the audio recognition result obtained by the audio recognition processing of the special mode. In other words, as shown in Fig. 8, a mark "1 character" indicating the audio recognition processing of the one-character mode and a mark "Uppercase" indicating the audio recognition processing of the uppercase conversion mode in the audio recognition processing of the special mode, are displayed on the lower side of the icon 51. Then, a user interface is displayed for dynamical display in which the audio recognition results in the midst of recognition by the audio recognition processing of the one-character mode and the uppercase conversion mode is converted from lowercase letters to uppercase letters while moving around the microphone of the icon 51.

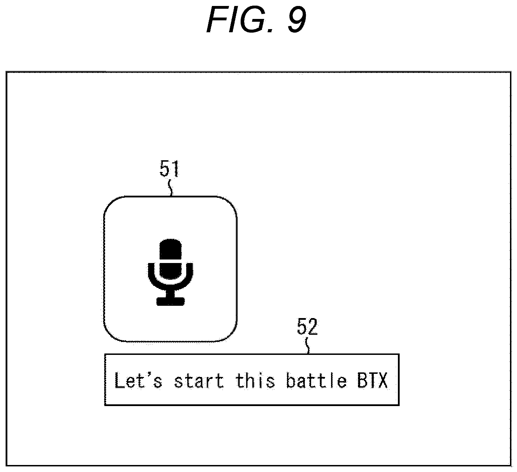

Fig. 8 shows an example of a user interface in which a lowercase letter "b" is converted to an uppercase letter "B". However, similar processing is repeated for subsequent uppercase letter "T" and uppercase letter "X". Then, when all the audio recognition with respect to the audio information "BTX" is completed, the audio recognition result "Let's start this battle BTX" is displayed in the display field 52 as shown in Fig. 9.

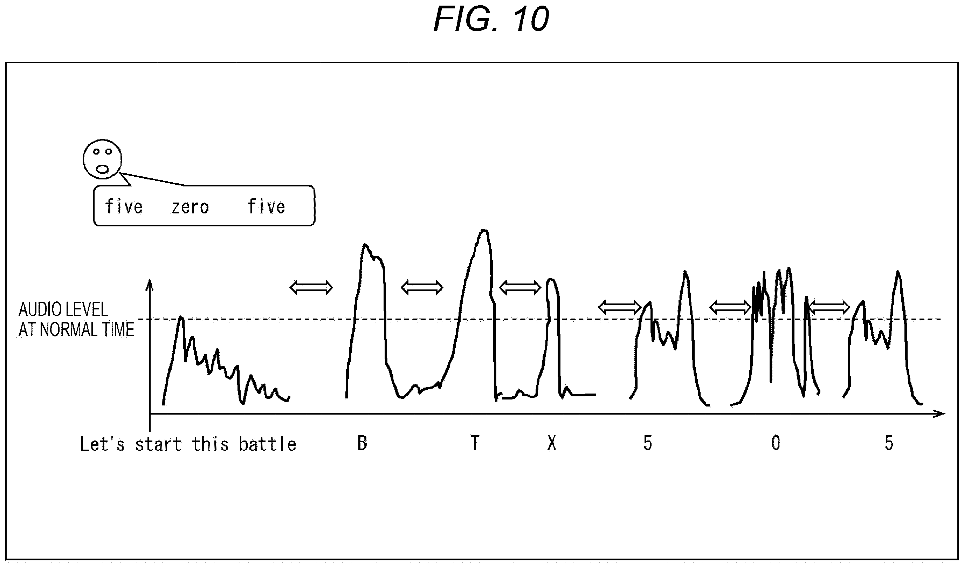

Next, Fig. 10 shows a state in which the audio information "505" is supplied subsequent to the audio information "Let's start this battle BTX" in the audio information "Let's start this battle BTX505", to the audio recognition server 14. Note that, in a case where the audio recognition processing of the normal mode is performed on the audio information "505", the audio recognition result "five zero five" is obtained as shown in the drawing.

First, the speech feature detection unit 23 compares the audio levels as processing of detecting the speech feature from the audio information "505". In the example of Fig. 10, the audio level of the audio information "505" exceeds the audio level at the normal time, and the speech feature detection unit 23 supplies the speech feature detection result indicating that the audio level exceeds the audio level at the normal time, to the audio recognition mode switching processing unit 26.

Furthermore, the specific silent period detection unit 24 performs processing of detecting a specific silent period from the audio information "505". In the example of Fig. 10, the period shown by a while arrow is detected as the specific silent period, and the specific silent period detection unit 24 supplies the specific silent period detection result indicating the timing and the interval at which the specific silent period has been detected, to the audio recognition mode switching processing unit 26.

Then, the audio recognition mode switching processing unit 26 determines whether or not the audio recognition processing of the special mode is performed on the basis of the speech feature detection result supplied from the speech feature detection unit 23, and the specific silent period detection result supplied from the specific silent period detection unit 24. In the example shown in Fig. 10, the audio recognition mode switching processing unit 26 determines that the audio recognition processing of the special mode is performed on the basis of the fact that the audio level exceeds the audio level at the normal time, and the specific silent period is detected at predetermined timings and intervals.

Therefore, the audio recognition mode switching processing unit 26 supplies the audio information "BTX" to the special mode audio recognition unit 28, and the special mode audio recognition unit 28 performs audio recognition processing of the special mode.

For example, the special mode audio recognition unit 28 supplies a number "505" to the audio recognition result output processing unit 29 as the audio recognition result obtained by performing the audio recognition processing of the special mode (one-character mode and number conversion mode). Therefore, the audio recognition result output processing unit 29 generates audio recognition result information for outputting the user interface that causes the user of the client terminal 13 to recognize that the audio recognition result of the number "505" has been obtained, and supplies the audio recognition result information to the communication unit 21.

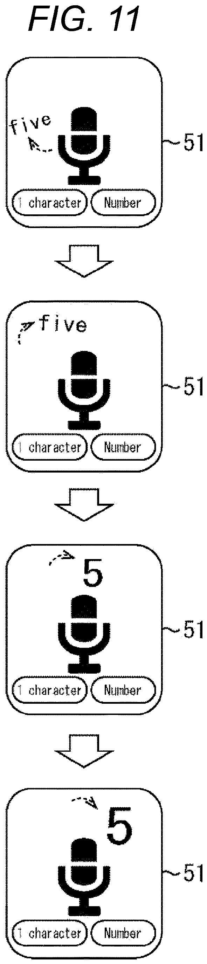

As a result, the client terminal 13 displays the user interface based on the audio recognition result obtained by the audio recognition processing of the special mode. In other words, as shown in Fig. 11, a mark "1 character" indicating the audio recognition processing of the one-character mode and a mark "Number" indicating the audio recognition processing of the number conversion mode in the audio recognition processing of the special mode, are displayed on the lower side of the icon 51. Then, a user interface is displayed for dynamical display in which the audio recognition results in the midst of recognition by the audio recognition processing of the one-character mode and the number conversion mode is converted from words to numbers while moving around the microphone of the icon 51.

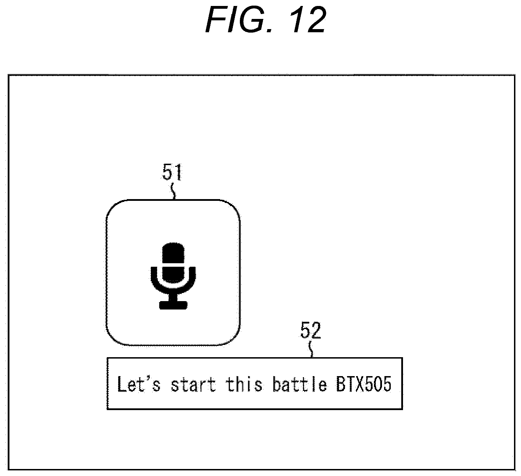

Fig. 11 shows an example of a user interface in which a word "five" is converted to a number "5". However, similar processing is repeated for subsequent number "0" and number "5". Then, when all the audio recognition with respect to the audio information "505" is completed, the audio recognition result "Let's start this battle BTX505" is displayed in the display field 52 as shown in Fig. 12.

### <Description of audio recognition processing>

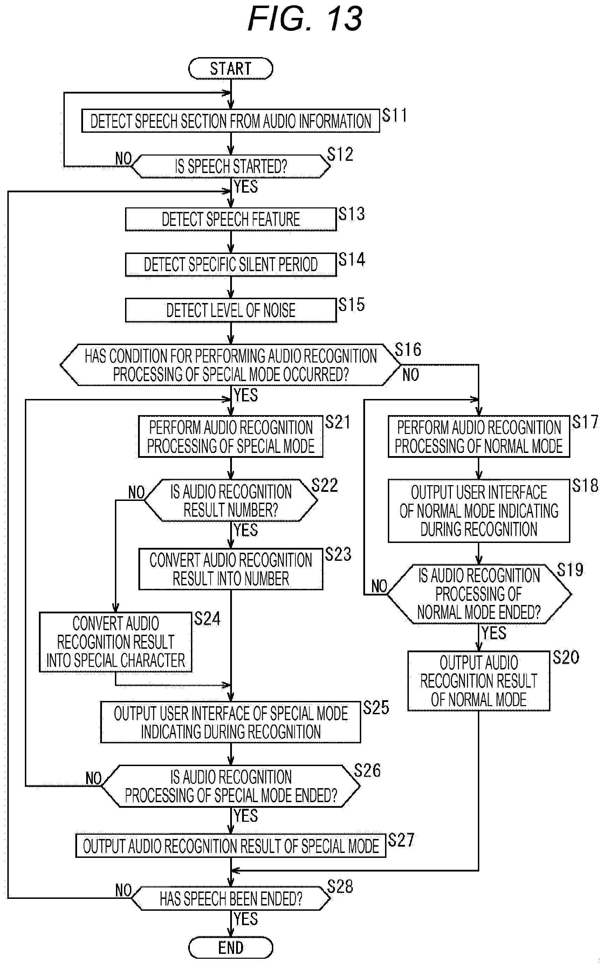

Fig. 13 is a flowchart explaining the audio recognition processing performed in the audio recognition server 14.

For example, the communication unit 21 receives the audio information transmitted from the client terminal 13 via the network 12 and supplies the audio information to the input sound processing unit 22, and then the processing starts. In step S11, the input sound processing unit 22 performs processing of detecting a speech section including the audio spoken by the user of the client terminal 13 from the audio information supplied from the communication unit 21.

In step S12, the input sound processing unit 22 determines whether or not the speech by the user of the client terminal 13 has started, according to the detection result of the speech section in the processing in step S11. In step S12, in a case where the input sound processing unit 22 determines that the speech has not started, the processing returns to step S11, and the processing is on standby until it is determined that the speech has started.

On the other hand, in step S12, in a case where the input sound processing unit 22 determines that the speech of the user of the client terminal 13 has started, the processing proceeds to step S13. At this time, the input sound processing unit 22 starts supplying of the audio information of the speech section to the speech feature detection unit 23, the specific silent period detection unit 24, the noise detection unit 25, and the audio recognition mode switching processing unit 26.

In step S13, the speech feature detection unit 23 performs processing of detecting the speech feature from the audio information of the speech section supplied from the input sound processing unit 22, and supplies the speech feature detection result to the audio recognition mode switching processing unit 26. For example, the speech feature detection result includes a result of comparison between the audio level of the audio information and the audio level at the normal time, a result of detection that the audio speed of the audio information is relatively decreased, a result of detection that the audio frequency of the audio information is relatively increased, and the like.

In step S14, the specific silent period detection unit 24 performs processing of detecting the specific silent period from the audio information of the speech section supplied from the input sound processing unit 22, and supplies the specific silent period detection result to the audio recognition mode switching processing unit 26 in a case of detecting the specific silent period. For example, the specific silent period detection result includes the timing and the interval at which the specific silent period detection unit 24 has detected the specific silent period.

In step S15, the noise detection unit 25 performs processing of detecting the noise from the audio information of the speech section supplied from the input sound processing unit 22, and supplies the noise detection result indicating that the noise has been detected, to the audio recognition mode switching processing unit 26, in a case of detecting noise of a predetermined level or higher.

In step S16, the audio recognition mode switching processing unit 26 determines whether or not a condition for performing the audio recognition processing of the special mode has occurred on the basis of the speech feature detection result, the specific silent period, and the noise detection result. For example, in a case where the audio level of the audio based on the audio information is larger than the audio level at the normal time and the specific silent period is detected twice or more for a predetermined period (for example, one to two seconds), the audio recognition mode switching processing unit 26 determines that a condition for performing the audio recognition processing in the special mode has occurred.

Similarly, in a case where the audio input speed based on the audio information is relatively slow, and the specific silent period is detected twice or more in a predetermined period, the audio recognition mode switching processing unit 26 determines that a condition for performing the audio recognition processing in the special mode has occurred. Furthermore, in a case where the frequency of the audio based on the audio information is relatively high, and the specific silent period is detected twice or more in a predetermined period, the audio recognition mode switching processing unit 26 determines that a condition for performing the audio recognition processing of the special mode has occurred. For example, when speaking special characters such as an ID, a user generally tends to speak with a larger voice than a normal conversation, speak in a slow tone, or speak with a high voice. Therefore, it is preferable to select the audio recognition processing of the special mode under the above-mentioned conditions. Furthermore, in a case where the noise detection result indicates that noise of a predetermined level or higher is detected, the audio recognition mode switching processing unit 26 does not select the audio recognition processing of the special mode, and causes the audio recognition processing of the normal mode to be performed.

In step S16, in a case where the audio recognition mode switching processing unit 26 determines that the condition for performing the audio recognition processing of the special mode has not occurred, the processing proceeds to step S17.

In step S17, the audio recognition mode switching processing unit 26 supplies the audio information of the speech section supplied from the input sound processing unit 22 to the normal mode audio recognition unit 27, and the normal mode audio recognition unit 27 performs the audio recognition processing of the normal mode.

In step S18, the normal mode audio recognition unit 27, for example, in every time when recognizing a word from the audio information, supplies the word to the audio recognition result output processing unit 29 as an audio recognition result. The audio recognition result output processing unit 29 generates audio recognition result information for outputting the user interface that causes the user of the client terminal 13 to recognize that it is the audio recognition result obtained by the audio recognition processing of the normal mode, and supplies the audio recognition result information to the communication unit 21. As a result, in the client terminal 13, the user interface as described above is displayed with reference to Fig. 6.

In step S19, the audio recognition mode switching processing unit 26 determines whether or not the audio recognition processing of the normal mode is ended. For example, as similar to step S16, the audio recognition mode switching processing unit 26 constantly monitors whether or not a condition for performing the audio recognition processing of the special mode has occurred, and when a condition for performing the audio recognition processing of the special mode has occurred, the audio recognition mode switching processing unit 26 determines that the audio recognition processing of the normal mode is ended. Furthermore, for example, also when supply of the audio information of the speech section from the input sound processing unit 22 has stopped, the audio recognition mode switching processing unit 26 determines that the audio recognition processing of the normal mode is ended.

In step S19, in a case where the audio recognition mode switching processing unit 26 determines that the audio recognition processing of the normal mode is not ended, the processing returns to step S17, and similar processing is repeated thereafter. On the other hand, in step S19, in a case where the audio recognition mode switching processing unit 26 determines that the audio recognition processing of the normal mode is ended, the processing proceeds to step S20.

In step S20, the normal mode audio recognition unit 27 supplies the audio recognition result for a period from when the audio recognition processing of the normal mode starts until the audio recognition processing ends, to the audio recognition result output processing unit 29. The audio recognition result output processing unit 29 generates audio recognition result information for outputting the user interface that presents the audio recognition result to the user, and supplies the audio recognition result information to the communication unit 21. As a result, at this time, the client terminal 13 displays the user interface indicating the audio recognition result recognized by the audio recognition processing of the normal mode.

On the other hand, in step S16, in a case where the audio recognition mode switching processing unit 26 determines that the condition for performing the audio recognition processing of the special mode has occurred, the processing proceeds to step S21.

In step S21, the audio recognition mode switching processing unit 26 supplies the audio information of the speech section supplied from the input sound processing unit 22 to the special mode audio recognition unit 28, and the special mode audio recognition unit 28 performs the audio recognition processing of the special mode.

In step S22, the special mode audio recognition unit 28 refers to the character string number conversion table as shown in Fig. 3, and determines whether or not the audio recognition result is a number.

In step S22, in a case where the special mode audio recognition unit 28 determines that the audio recognition result is a number, the processing proceeds to step S23, and the special mode audio recognition unit 28 converts the audio recognition result into a number.

On the other hand, in step S22, in a case where the special mode audio recognition unit 28 determines that the audio recognition result is not a number, the processing proceeds to step S24, and the special mode audio recognition unit 28 changes the audio recognition result into a special character.

After processing of step S23 or S24, the processing proceeds to step S25, for example, in every time when recognizing a number or a special character from the audio information, the special mode audio recognition unit 28 supplies the audio recognition result to the audio recognition result output processing unit 29. The audio recognition result output processing unit 29 generates audio recognition result information for outputting the user interface that causes the user of the client terminal 13 to recognize that it is the audio recognition result obtained by the audio recognition processing of the special mode, and supplies the audio recognition result information to the communication unit 21. As a result, in the client terminal 13, the user interface as described above with reference to Figs. 8 and 11 is displayed.

In step S26, the audio recognition mode switching processing unit 26 determines whether or not the audio recognition processing of the special mode is ended. For example, the audio recognition mode switching processing unit 26 constantly monitors whether or not a condition for performing the audio recognition processing of the special mode that has occurred in step S16 continues, and when a condition for performing the audio recognition processing of the special mode does not continue anymore, the audio recognition mode switching processing unit 26 determines that the audio recognition processing of the special mode is ended. Furthermore, for example, also when supply of the audio information of the speech section from the input sound processing unit 22 has stopped, the audio recognition mode switching processing unit 26 determines that the audio recognition processing of the special mode is ended.

In step S26, in a case where the audio recognition mode switching processing unit 26 determines that the audio recognition processing of the special mode is not ended, the processing returns to step S21, and similar processing is repeated thereafter. On the other hand, in step S26, in a case where the audio recognition mode switching processing unit 26 determines that the audio recognition processing of the special mode is ended, the processing proceeds to step S27.

In step S27, the special mode audio recognition unit 28 supplies the audio recognition result for a period from when the audio recognition processing of the special mode starts until the audio recognition processing ends, to the audio recognition result output processing unit 29. The audio recognition result output processing unit 29 generates audio recognition result information for outputting the user interface that presents the audio recognition result to the user, and supplies the audio recognition result information to the communication unit 21. As a result, at this time, the client terminal 13 displays the user interface indicating the audio recognition result recognized by the audio recognition processing of the special mode.

After processing of step S20 or S27, the processing proceeds to step S28, and the input sound processing unit 22 determines whether or not the speech by the user of the client terminal 13 has been ended. In step S28, in a case where the input sound processing unit 22 determines that the speech has not ended, the processing returns to step S13, and similar processing is repeated thereafter.

On the other hand, in step S28, in a case where the input sound processing unit 22 determines that the speech of the user of the client terminal 13 has ended, the audio recognition processing is ended.

As described above, the audio recognition server 14 can switch the audio recognition processing of the normal mode and the audio recognition processing of the special mode on the basis of the speech feature detection result, the specific silent period, and the noise detection result. As a result, the audio recognition server 14 can perform appropriate audio recognition processing in a case where a special character is included in the middle of a normal conversation, so that more preferable audio input can be provided.

### <Audio recognition processing for Japanese>

The audio recognition system 11 can cope with audio recognition processing for Japanese.

As described above, in the audio recognition processing for English, the uppercase conversion mode is performed in the special mode audio recognition unit 28. On the other hand, in the audio recognition processing for Japanese, for example, it is possible to perform a conversion mode to convert to Hiragana or Katakana in the special mode audio recognition unit 28.

For example, in a case where the specific silent period detection unit 24 detects a specific silent period from the audio information, the audio recognition mode switching processing unit 26 determines that the user needs audio recognition of one character by one character, and the special mode audio recognition unit 28 performs audio recognition processing of the one-character mode.

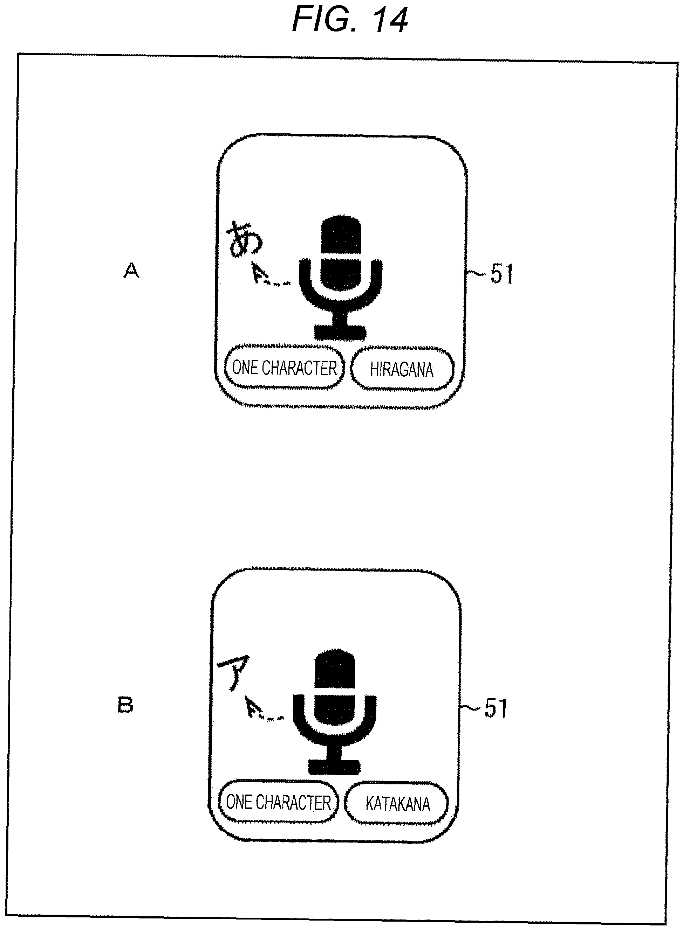

At this time, when the speech feature detection unit 23 detects that the audio level of the audio information is equal to or lower than the audio level at the normal time, the special mode audio recognition unit 28 performs audio recognition processing in the hiragana mode. As a result, as shown in A in Fig. 14, a mark "one character" indicating the audio recognition processing of the one-character mode and a mark "hiragana" indicating the audio recognition processing of the hiragana mode in the audio recognition processing of the special mode, are displayed on the lower side of the icon 51.

On the other hand, when the speech feature detection unit 23 detects that the audio level of the audio information exceeds the audio level at the normal time, the special mode audio recognition unit 28 performs audio recognition processing in the katakana mode. As a result, as shown in B in Fig. 14, a mark "one character" indicating the audio recognition processing of the one-character mode and a mark "katakana" indicating the audio recognition processing of the katakana mode in the audio recognition processing of the special mode, are displayed on the lower side of the icon 51.

In this manner, the audio recognition system 11 can perform the audio recognition processing of the special mode suitable for each language.

### <API of audio recognition system>

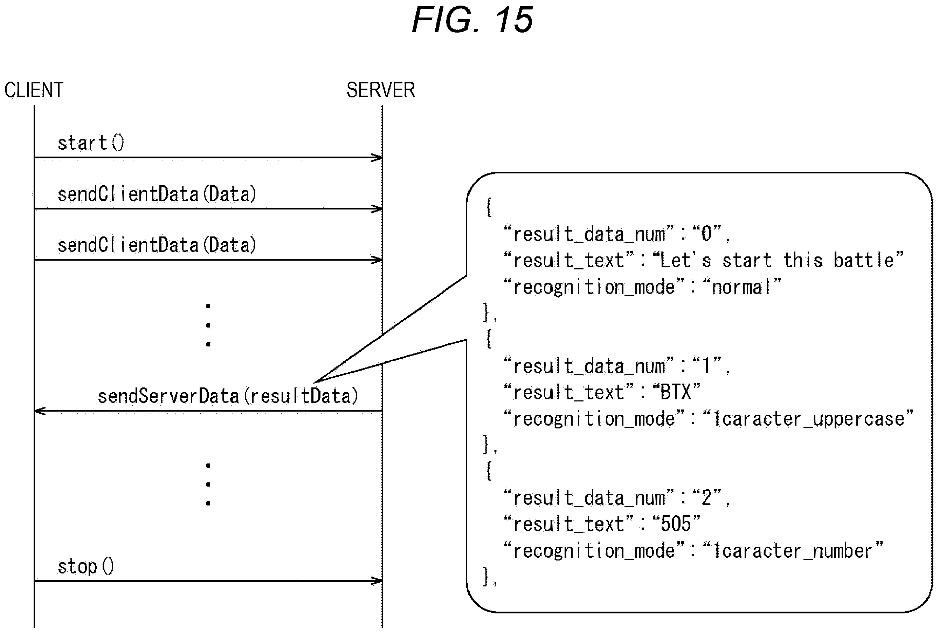

Fig. 15 shows an example of an application programming interface (API) for realizing the audio recognition processing by the audio recognition system 11.

First, when it is detected the speech by the user starts in the client terminal 13, a start command (start ()) giving an instruction on the start of the audio recognition processing is transmitted from the client terminal 13 to the audio recognition server 14.

Subsequently, client transmission data (send Client Data (Data)) is sequentially transmitted from the client terminal 13 to the audio recognition server 14. In the client transmission data, for example, the audio information "Let's start this battle", the audio information "BTX", and the audio information "505" as described above are stored as data.

Then, after the audio recognition processing is performed in the audio recognition server 14, server transmission data (send Server Data (result Data)) is sequentially transmitted from the audio recognition server 14 to the client terminal 13. In the server transmission data, for example, the audio recognition result "Let's start this battle", the audio recognition result "BTX", and the audio recognition result "505" as described above are stored as data. Furthermore, each audio recognition result includes a data number (result_data_num), text (result_text), and mode information (recognition_mode).

Such data transmission and reception is performed between the client terminal 13 and the audio recognition server 14. Thereafter, when it is detected that the speech by the user ends in the client terminal 13, a stop command (stop()) giving an instruction on the end of the audio recognition processing is transmitted from the client terminal 13 to the audio recognition server 14.

With the API as described above, the audio recognition processing by the audio recognition system 11 can be realized.

### <Display example of audio recognition result>

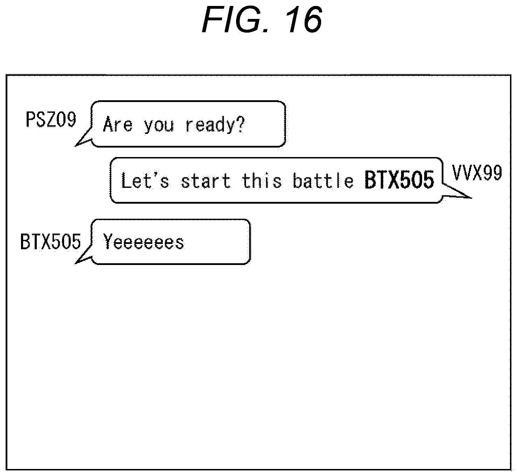

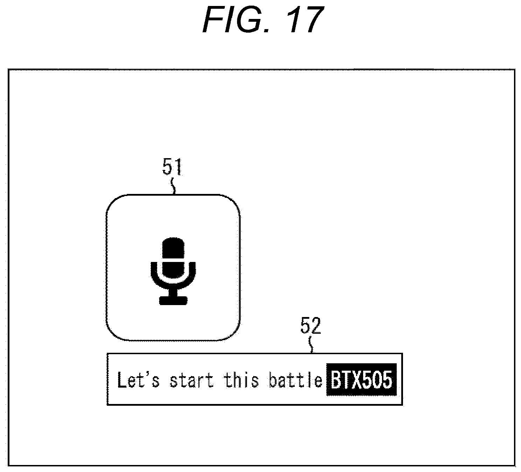

A display example of the audio recognition result in the client terminal 13 will be described with reference to Fig. 16 and Fig. 17.

As shown in Fig. 16, in the client terminal 13, for example, audio recognition can be adopted in a chat application. Fig. 16 shows an example in which a comment "Let's start this battle BTX505" by a user name "WX99" is returned in response to a comment "Are you ready?" by a user name "PSZ09" and a comment "Yeeeeees" by a user name "BTX505" is performed.

At this time, a friend list in which the user names for chatting are registered is held in the client terminal 13, and for example, in the friend list of the user name "VVX99", the user name "PSZ09" and the user name "BTX505" and the like are registered. Therefore, in a case where the user name registered in the friend list is obtained as the audio recognition result, the client terminal 13 can emphasize and display the user name.

In the example shown in Fig. 16, the user name "BTX505" of the comment "Let's start this battle BTX505" by the user name "WX99" is decorated so as to be emphasized in bold.

Similarly, Fig. 17 shows an example in which the user name "BTX505" is emphasized by highlight display in the display field 52.

In this way, the user name registered in the friend list is emphasized and displayed in the client terminal 13, the user can easily visually recognize that the audio recognition result is a user name. Note that, for example, the audio recognition result output processing unit 29 may designate such emphasizing and displaying of the user name by the audio recognition result information and cause the client terminal 13 to perform emphasizing and displaying.

Furthermore, as similar to the user name, the client terminal 13 emphasizes and displays the audio recognition result obtained by performing the audio recognition processing of the special mode by the special mode audio recognition unit 28, so as to assist the user to recognize that the audio recognition result is a special character such as abbreviation or a number. In this way, the user recognizes a special character at a glance, so that communication is smoothly performed, and it is easy for the user to concentrate on the original work.

In addition, the client terminal 13 can emphasize the audio recognition result by various methods, for example, by changing the color of the character, changing the size, or highlighting. Note that in a case where the audio recognition result is output by synthesized audio, the client terminal 13 can output the audio recognition result by the audio recognition processing of the normal mode at the normal volume, and output the audio recognition result by the audio recognition processing of the special mode at a volume larger than normal. Alternatively, the sound quality at the time of outputting the audio recognition result by the audio recognition processing of the special mode may be changed. This makes it easy for the user to recognize special characters and the like.

As described above, the audio recognition result output processing unit 29 can generate the audio recognition result information for changing the representation of the user interface, between the audio recognition result by the audio recognition processing of the normal mode and the audio recognition result by the audio recognition processing of the special mode.

Note that, for example, in a case where, even if the audio recognition processing of the normal mode is repeated a plurality of times, similar audio information is supplied, in other words, a user repeats the same speech, the audio recognition mode switching processing unit 26 may determine that the audio recognition result is wrong and perform the audio recognition processing of the special mode. Furthermore, in a case where information that the user performs the operation of deleting all the audio input to the same audio recognition result is supplied, it can be determined that the audio recognition result is wrong. Therefore, in this case, for example, even if the audio recognition mode switching processing unit 26 performs the audio recognition processing of the normal mode three times, when deletion of all the audio input is repeatedly performed, the audio recognition mode switching processing unit 26 can perform the audio recognition processing of the special mode with respect to the audio information to be supplied next.

Furthermore, for example, the audio recognition mode switching processing unit 26 can determine the selection of the audio recognition processing of the special mode according to an attribute of the text field to be subjected to audio input. For example, a text field for entering a zip code has an attribute for inputting only numbers, so that the audio recognition mode switching processing unit 26 can determine to perform the number conversion mode in the audio recognition processing of the special mode.

Incidentally, in a case where the reliability of one of the audio recognition results of the audio recognition result "BTX" and the audio recognition result "505" for the user name "BTX505" as described above is low, the special mode audio recognition unit 28 can display only one of the audio recognition results. In other words, with respect to such a user name, a user can recognize that it is a user name more smoothly in a case of display of only a part being a correct audio recognition result, rather than display of an audio recognition result of which a part is wrong.

Furthermore, for example, in a case where an operation for giving an instruction on the audio recognition processing of the special mode is performed in the client terminal 13, the audio recognition mode switching processing unit 26 can switch the mode to the audio recognition processing of the special mode according to the operation.

Moreover, in the audio recognition system 11, instead of connecting only one audio recognition server 14, for example, a plurality of audio recognition servers 14 may be connected so that audio recognition processing of the same audio information can be simultaneously performed by each of the audio recognition servers 14. In this case, it is possible to provide a user interface such that a plurality of audio recognition results are presented with reliability added thereto and can be selected by the user.

Note that each processing that has been described with reference to the flow charts described above need not always be performed in chronological order in accordance with the order described in the flowchart, but may be performed in parallel or individually (for example, parallel processing or processing by an object). Furthermore, the program may be processed by one central processing unit (CPU) or processed by distributed processing by a plurality of CPUs.

Furthermore, the series of processing described above (information processing method) can be also executed by hardware. However, the series of processing can also be executed by software. In a case of executing the series of processing by software, a program included in the software is installed from a program recording medium in which a program is recorded, to a computer incorporated in dedicated hardware, or a general personal computer or the like, for example, that can execute various functions by installing various programs.

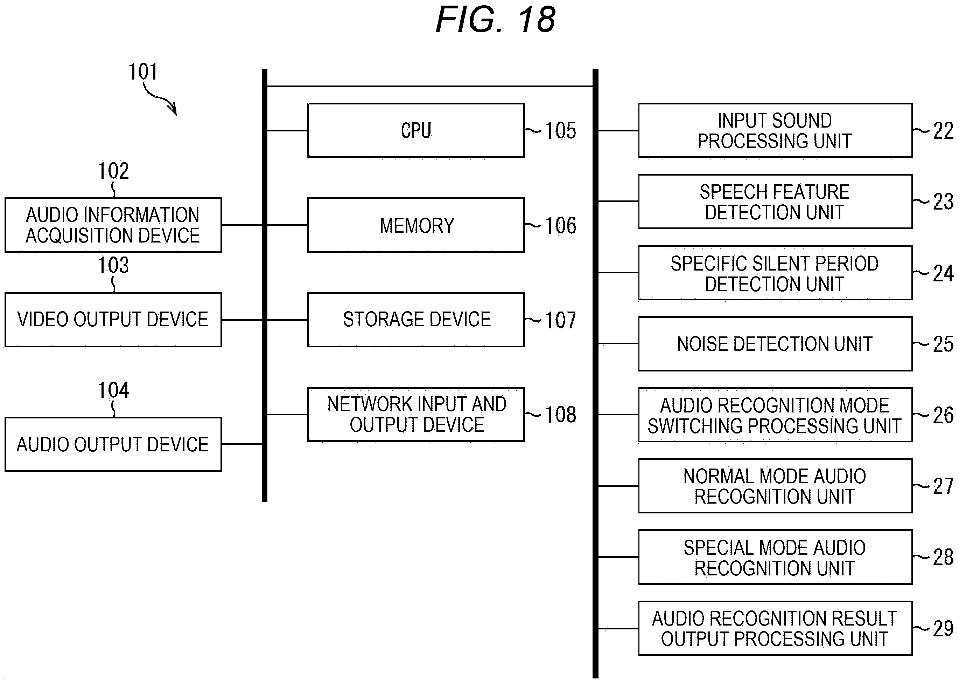

Fig. 18 is a block diagram showing an example of a hardware configuration of a computer that executes the above-described series of processing by a program.

Here, a computer 101 shown in Fig. 18 corresponds to, for example, the client terminal 13 in Fig. 1, and Fig. 18 shows a configuration example in which processing can be performed by the client terminal 13 alone without processing via the network 12.

The computer 101 includes an audio information acquisition device 102, a video output device 103, an audio output device 104, a CPU 105, a memory 106, a storage device 107, and a network input and output device 108. Moreover, as similar to the audio recognition server 14 shown in Fig. 2, the computer 101 includes the communication unit 21, the input sound processing unit 22, the speech feature detection unit 23, the specific silent period detection unit 24, the noise detection unit 25, the audio recognition mode switching processing unit 26, the normal mode audio recognition unit 27, the special mode audio recognition unit 28, and the audio recognition result output processing unit 29.

For example, the audio information acquisition device 102 includes a microphone, the video output device 103 includes a display, and the audio output device 104 includes a speaker. Furthermore, the network input and output device 108 corresponds to the communication unit 21 of Fig. 2, and can perform communication according to the standard of the local area network (LAN), for example.

Then, in the computer 101, the CPU 105 reads the program stored in the storage device 107 to the memory 106 and executes the program, so that the above-described series of processing is performed.

Note that the program to be executed by the CPU 105 can be provided by being recorded in a package medium including, for example, a magnetic disk (including a flexible disk), an optical disk (a compact disc-read only memory (CD-ROM), a digital versatile disc (DVD), or the like), a magneto-optical disc, a semiconductor memory, or the like, or can be provided via a wired or wireless transmission medium by utilizing the network input and output device 108.

Note that the present embodiment is not limited to the above-described embodiments, and various modifications are possible without departing from the gist of the present disclosure.

### REFERENCE SIGNS LIST

- 11: Audio recognition system
- 12: Network
- 13: Client terminal
- 14: Audio recognition server
- 21: Communication unit
- 22: Input sound processing unit
- 23: Speech feature detection unit
- 24: Specific silent period detection unit
- 25: Noise detection unit
- 26: Audio recognition mode switching processing unit
- 27: Normal mode audio recognition unit
- 28: Special mode audio recognition unit
- 29: Audio recognition result output processing unit
- 51: Icon
- 52: Display field
- 101: Computer
- 102: Audio information acquisition device
- 103: Video output device
- 104: Audio output device
- 105: CPU
- 106: Memory
- 107: Storage device
- 108: Network input and output device

## Claims

1. An audio recognition apparatus comprising:
a speech feature detection unit that acquires audio information obtained by a speech of a user and detects a feature of the speech from the audio information;
a specific silent period detection unit that detects a specific silent period that is a specific short silent period not determined as a silent period in processing of detecting a speech section in which the audio information includes audio;
a selection unit that selects audio recognition processing to be performed on the audio information on the basis of the feature of the speech that has been detected from the audio information by the speech feature detection unit, and the specific silent period that has been detected from the audio information by the specific silent period detection unit; and
an output processing unit that outputs, along with an audio recognition result obtained by recognition in the audio recognition processing that has been selected by the selection unit, an audio recognition result information indicating the audio recognition processing in which the audio recognition result has been obtained.

2. The audio recognition apparatus according to claim 1, wherein
the selection unit selects either audio recognition processing of a normal mode for recognizing a normal character string or audio recognition processing of a special mode for recognizing a special character string as the audio recognition processing performed on the audio information.

3. The audio recognition apparatus according to claim 2, wherein
in a case where it is determined that the specific feature has been detected from the audio information by the speech feature detection unit, and determined that the specific silent period has been repeatedly detected at a predetermined interval from the audio information by the specific silent period detection unit, the selection unit selects the audio recognition processing of the special mode.

4. The audio recognition apparatus according to claim 3, wherein
the speech feature detection unit detects an audio level of the audio based on the audio information as the feature of the speech, and
in a case where the audio level of the audio exceeds a preset predetermined audio level, the selection unit determines that the specific feature has been detected from the audio information.

5. The audio recognition apparatus according to claim 3, wherein
the speech feature detection unit detects an input speed of the audio based on the audio information as the feature of the speech, and
in a case where a change has occurred in which the input speed of the audio detected by the speech feature detection unit becomes relatively slow, the selection unit determines that the specific feature has been detected from the audio information.

6. The audio recognition apparatus according to claim 3, wherein
the speech feature detection unit detects a frequency of the audio based on the audio information as the feature of the speech, and
in a case where a change has occurred in which the frequency of the audio detected by the speech feature detection unit becomes relatively high, the selection unit determines that the specific feature has been detected from the audio information.

7. The audio recognition apparatus according to claim 2, wherein
in the audio recognition processing of the special mode, words recognized by audio recognition are converted into numbers and are output.

8. The audio recognition apparatus according to claim 2, wherein
in the audio recognition processing of the special mode, alphabets recognized by audio recognition are converted into uppercase letters one character by one character and are output.

9. the audio recognition apparatus according to claim 2, wherein
in the audio recognition processing of the special mode, each one character recognized by audio recognition is converted into katakana and is output.

10. The audio recognition apparatus according to claim 2, further comprising a noise detection unit that detects an audio level of noise included in the audio information,
wherein, in a case where the audio level of the noise exceeds a preset predetermined audio level, the selection unit avoids selection of the audio recognition processing of the special mode.

11. The audio recognition apparatus according to claim 2, wherein
the output processing unit changes representation of a user interface between an audio recognition result by the audio recognition processing of the normal mode and an audio recognition result by the audio recognition processing of the special mode.

12. The audio recognition apparatus according to claim 1, further comprising:
a communication unit that communicates with another apparatus via a network; and
an input sound processing unit that performs processing of detecting a speech section in which the audio information includes audio,
wherein the communication unit
acquires the audio information transmitted from the another apparatus via the network, supplies the audio information to the input sound processing unit, and
transmits the audio recognition result information output from the output processing unit to the another device via the network.

13. An audio recognition method comprising steps of:
acquiring audio information obtained by a speech of a user and detecting a feature of the speech from the audio information;
detecting a specific silent period that is a specific short silent period not determined as a silent period in processing of detecting a speech section in which the audio information includes audio;
selecting audio recognition processing to be performed on the audio information on the basis of the feature of the speech that has been detected from the audio information, and the specific silent period that has been detected from the audio information; and
outputting, along with an audio recognition result obtained by recognition in the audio recognition processing that has been selected, an audio recognition result information indicating the audio recognition processing in which the audio recognition result has been obtained.

14. A program that causes a computer to execute audio recognition comprising steps of:
acquiring audio information obtained by a speech of a user and detecting a feature of the speech from the audio information;
detecting a specific silent period that is a specific short silent period not determined as a silent period in processing of detecting a speech section in which the audio information includes audio;
selecting audio recognition processing to be performed on the audio information on the basis of the feature of the speech that has been detected from the audio information, and the specific silent period that has been detected from the audio information; and
outputting, along with an audio recognition result obtained by recognition in the audio recognition processing that has been selected, an audio recognition result information indicating the audio recognition processing in which the audio recognition result has been obtained.

## Patentansprüche

1. Audioerkennungsvorrichtung, die Folgendes umfasst:
eine Sprachmerkmal-Detektionseinheit, die Audioinformationen erfasst, die durch eine Sprache eines Benutzers erhalten werden, und ein Merkmal der Sprache aus den Audioinformationen detektiert;
eine Spezifische-Leiseperiode-Detektionseinheit, die eine spezifische Leiseperiode detektiert, die eine spezifische kurze Leiseperiode ist, die beim Verarbeiten des Detektierens einer Sprachsektion, in welcher die Audioinformationen Audio beinhalten, nicht als eine Leiseperiode bestimmt wurde;
eine Auswahleinheit, die auswählt, dass Audioerkennungsverarbeitung an den Audioinformationen durchgeführt wird, auf der Grundlage des Merkmals der Sprache, das durch die Sprachmerkmal-Detektionseinheit aus den Audioinformationen detektiert wurde, und der spezifischen Leiseperiode, die durch die Spezifische-Leiseperiode-Detektionseinheit aus den Audioinformationen detektiert wurde; und
eine Ausgabeverarbeitungseinheit, die, zusammen mit einem durch Erkennung in der Audioerkennungsverarbeitung, die durch die Auswahleinheit ausgewählt wurde, Audioerkennungsergebnisinformationen ausgibt, die die Audioerkennungsverarbeitung angeben, mit welcher das Audioerkennungsergebnis erhalten wurde.

2. Audioerkennungsvorrichtung nach Anspruch 1,
wobei
die Auswahleinheit entweder Audioerkennungsverarbeitung eines Normalmodus zum Erkennen einer normalen Zeichenkette oder Audioerkennungsverarbeitung eines Spezialmodus zum Erkennen einer speziellen Zeichenkette als die an den Audioinformationen durchzuführende Audioerkennungsverarbeitung auswählt.

3. Audioerkennungsvorrichtung nach Anspruch 2,
wobei
in einem Fall, in dem bestimmt wird, dass das spezifische Merkmal durch die Sprachmerkmal-Detektionseinheit aus den Audioinformationen detektiert wurde, und bestimmt wird, dass die spezifische Leiseperiode durch die Spezifische-Leiseperiode-Detektionseinheit in einem vorbestimmten Intervall aus den Audioinformationen wiederholt detektiert wurde, die Auswahleinheit die Audioerkennungsverarbeitung des Spezialmodus auswählt.

4. Audioerkennungsvorrichtung nach Anspruch 3,
wobei
die Sprachmerkmal-Detektionseinheit einen Audiopegel des Audios auf der Grundlage der Audioinformationen als das Merkmal der Sprache detektiert, und
in einem Fall, in dem der Audiopegel des Audios einen voreingestellten vorbestimmten Audiopegel übersteigt, die Auswahleinheit bestimmt, dass das spezifische Merkmal aus den Audioinformationen detektiert wurde.

5. Audioerkennungsvorrichtung nach Anspruch 3,
wobei
die Sprachmerkmal-Detektionseinheit eine Eingabegeschwindigkeit des Audios auf der Grundlage der Audioinformationen als das Merkmal der Sprache detektiert, und
in einem Fall, in dem eine Änderung aufgetreten ist, in welcher die durch die Sprachmerkmal-Detektionseinheit detektierte Geschwindigkeit des Audios relativ langsam wird, die Auswahleinheit bestimmt, dass das spezifische Merkmal aus den Audioinformationen detektiert wurde.

6. Audioerkennungsvorrichtung nach Anspruch 3,
wobei
die Sprachmerkmal-Detektionseinheit eine Frequenz des Audios auf der Grundlage der Audioinformationen als das Merkmal der Sprache detektiert, und
in einem Fall, in dem eine Änderung aufgetreten ist, in welcher die durch die Sprachmerkmal-Detektionseinheit detektierte Frequenz des Audios relativ hoch wird, die Auswahleinheit bestimmt, dass das spezifische Merkmal aus den Audioinformationen detektiert wurde.

7. Audioerkennungsvorrichtung nach Anspruch 2,
wobei
in der Audioerkennungsverarbeitung des Spezialmodus durch Audioerkennung erkannte Wörter in Zahlen umgewandelt und ausgegeben werden.

8. Audioerkennungsvorrichtung nach Anspruch 2,
wobei
in der Audioerkennungsverarbeitung des Spezialmodus durch Audioerkennung erkannte Alphabete Zeichen für Zeichen in Großbuchstaben umgewandelt und ausgegeben werden.

9. Audioerkennungsvorrichtung nach Anspruch 2,
wobei
in der Audioerkennungsverarbeitung des Spezialmodus jedes einzelne durch Audioerkennung erkannte Zeichen in Katakana umgewandelt und ausgegeben wird.

10. Audioerkennungsvorrichtung nach Anspruch 2,
ferner umfassend eine Störgeräusch-Detektionseinheit, die einen in den Audioinformationen enthaltenen Störgeräusch-Audiopegel detektiert,
wobei, in einem Fall, in dem der Störgeräusch-Audiopegel einen voreingestellten vorbestimmten Audiopegel übersteigt, die Auswahleinheit Auswahl der Audioerkennungsverarbeitung des Spezialmodus vermeidet.

11. Audioerkennungsvorrichtung nach Anspruch 2,
wobei
die Ausgabeverarbeitungseinheit die Repräsentation einer Benutzerschnittstelle zwischen einem Audioerkennungsergebnis durch die Audioerkennungsverarbeitung des Normalmodus und einem Audioerkennungsergebnis durch die Audioerkennungsverarbeitung des Spezialmodus ändert.

12. Audioerkennungsvorrichtung nach Anspruch 1,
ferner Folgendes umfassend:
eine Kommunikationseinheit, die mit einer anderen Vorrichtung über ein Netzwerk kommuniziert; und
eine Eingangsschallverarbeitungseinheit, die Detektionsverarbeitung einer Sprachsektion durchführt, in welcher die Audioinformationen Audio beinhalten, wobei die Kommunikationseinheit Folgendes vornimmt:
Erfassen der von der anderen Vorrichtung über das Netzwerk gesendeten Audioinformationen, Liefern der Audioinformationen an die Eingangsschallverarbeitungseinheit, und
Senden der von der Ausgabeverarbeitungseinheit ausgegebenen Audioerkennungsergebnisinformationen an die andere Vorrichtung über das Netzwerk.

13. Audioerkennungsverfahren, das die folgenden Schritte umfasst:
Erfassen von Audioinformationen, die durch eine Sprache eines Benutzers erhalten werden, und Detektieren eines Merkmals der Sprache aus den Audioinformationen;
Detektieren einer spezifischen Leiseperiode, die eine spezifische kurze Leiseperiode ist, die beim Verarbeiten des Detektierens einer Sprachsektion, in welcher die Audioinformationen Audio beinhalten, nicht als eine Leiseperiode bestimmt wurde;
Auswählen, dass Audioerkennungsverarbeitung an den Audioinformationen durchgeführt wird, auf der Grundlage des Merkmals der Sprache, das aus den Audioinformationen detektiert wurde, und der spezifischen Leiseperiode, die aus den Audioinformationen detektiert wurde; und
Ausgeben, zusammen mit einem Audioerkennungsergebnis, erhalten durch Erkennung in der Audioerkennungsverarbeitung, die ausgewählt wurde, von Audioerkennungsergebnisinformationen, die die Audioerkennungsverarbeitung angeben, mit welcher das Audioerkennungsergebnis erhalten wurde.

14. Programm, das einen Computer zum Ausführen von Audioerkennung veranlasst, die folgenden Schritte umfassend:
Erfassen von Audioinformationen, die durch eine Sprache eines Benutzers erhalten werden, und Detektieren eines Merkmals der Sprache aus den Audioinformationen;
Detektieren einer spezifischen Leiseperiode, die eine spezifische kurze Leiseperiode ist, die beim Verarbeiten des Detektierens einer Sprachsektion, in welcher die Audioinformationen Audio beinhalten, nicht als eine Leiseperiode bestimmt wurde;
Auswählen, dass Audioerkennungsverarbeitung an den Audioinformationen durchgeführt wird, auf der Grundlage des Merkmals der Sprache, das aus den Audioinformationen detektiert wurde, und der spezifischen Leiseperiode, die aus den Audioinformationen detektiert wurde; und
Ausgeben, zusammen mit einem Audioerkennungsergebnis, erhalten durch Erkennung in der Audioerkennungsverarbeitung, die ausgewählt wurde, von Audioerkennungsergebnisinformationen, die die Audioerkennungsverarbeitung angeben, mit welcher das Audioerkennungsergebnis erhalten wurde.

## Revendications

1. Appareil de reconnaissance audio, comprenant :
une unité de détection de caractéristique de parole qui acquiert des informations audio obtenues par une parole d'un utilisateur et détecte une caractéristique de la parole à partir des informations audio ;
une unité de détection de période de silence spécifique qui détecte une période de silence spécifique consistant en une période de silence courte spécifique qui n'est pas déterminée comme une période de silence lors d'un traitement de détection d'un segment de parole dans lequel les informations audio contiennent de l'audio ;
une unité de sélection qui sélectionne un traitement de reconnaissance audio à réaliser sur les informations audio sur la base de la caractéristique de la parole qui a été détectée à partir des informations audio par l'unité de détection de caractéristique de parole et de la période de silence spécifique qui a été détectée à partir des informations audio par l'unité de détection de période de silence spécifique ; et
une unité de traitement de sortie qui fournit en sortie, conjointement avec un résultat de reconnaissance audio obtenu par une reconnaissance dans le traitement de reconnaissance audio qui a été sélectionné par l'unité de sélection, une information de résultat de reconnaissance audio indiquant le traitement de reconnaissance audio dans lequel le résultat de reconnaissance audio a été obtenu.

2. Appareil de reconnaissance audio selon la revendication 1, dans lequel
l'unité de sélection sélectionne, comme traitement de reconnaissance audio réalisé sur les informations audio, soit un traitement de reconnaissance audio d'un mode normal pour une reconnaissance d'une chaîne de caractères normale, soit un traitement de reconnaissance audio d'un mode spécial pour une reconnaissance d'une chaîne de caractères spéciale.

3. Appareil de reconnaissance audio selon la revendication 2, dans lequel
dans le cas où il est déterminé que la caractéristique spécifique a été détectée à partir des informations audio par l'unité de détection de caractéristique de parole et déterminé que la période de silence spécifique a été détectée à plusieurs reprises à un intervalle prédéterminé à partir des informations audio par l'unité de détection de période de silence spécifique, l'unité de sélection sélectionne le traitement de reconnaissance audio du mode spécial.

4. Appareil de reconnaissance audio selon la revendication 3, dans lequel
l'unité de détection de caractéristique de parole détecter, comme caractéristique de la parole, un niveau audio de l'audio sur la base des informations audio, et
dans le cas où le niveau audio de l'audio dépasse un niveau audio prédéterminé préétabli, l'unité de sélection détermine que la caractéristique spécifique a été détectée à partir des informations audio.

5. Appareil de reconnaissance audio selon la revendication 3, dans lequel
l'unité de détection de caractéristique de parole détecte, comme caractéristique de la parole, une vitesse d'entrée de l'audio sur la base des informations audio, et
dans le cas où un changement s'est produit selon lequel la vitesse d'entrée de l'audio détectée par l'unité de détection de caractéristique de parole devient relativement lente, l'unité de sélection détermine que la caractéristique spécifique a été détectée à partir des informations audio.

6. Appareil de reconnaissance audio selon la revendication 3, dans lequel
l'unité de détection de caractéristique de parole détecte, comme caractéristique de la parole, une fréquence de l'audio sur la base des informations audio, et
dans le cas où un changement s'est produit selon lequel la fréquence de l'audio détectée par l'unité de détection de caractéristique de parole devient relativement élevée, l'unité de sélection détermine que la caractéristique spécifique a été détectée à partir des informations audio.

7. Appareil de reconnaissance audio selon la revendication 2, dans lequel
dans le traitement de reconnaissance audio du mode spécial, des mots reconnus par une reconnaissance audio sont convertis en nombres et sont fournis en sortie.

8. Appareil de reconnaissance audio selon la revendication 2, dans lequel
dans le traitement de reconnaissance audio du mode spécial, des alphabets reconnus par une reconnaissance audio sont convertis en lettres majuscules un caractère à la fois et sont fournis en sortie.

9. Appareil de reconnaissance audio selon la revendication 2, dans lequel
dans le traitement de reconnaissance audio du mode spécial, chaque caractère reconnu par une reconnaissance audio est converti en katakana et est fourni en sortie.

10. Appareil de reconnaissance audio selon la revendication 2,
comprenant en outre une unité de détection de bruit qui détecte un niveau audio de bruit contenu dans les informations audio,
dans lequel, dans le cas où le niveau audio du bruit dépasse un niveau audio prédéterminé préétabli, l'unité de sélection évite de sélectionner le traitement de reconnaissance audio du mode spécial.

11. Appareil de reconnaissance audio selon la revendication 2, dans lequel
l'unité de traitement de sortie change une représentation d'une interface-utilisateur entre un résultat de reconnaissance audio par le traitement de reconnaissance audio du mode normal et un résultat de reconnaissance audio par le traitement de reconnaissance audio du mode spécial.

12. Appareil de reconnaissance audio selon la revendication 1,
comprenant en outre :
une unité de communication qui communique avec un autre appareil par l'entremise d'un réseau ; et
une unité de traitement de son de sortie qui réalise un traitement de détection d'un segment de parole dans lequel les informations audio contiennent de l'audio,
dans lequel l'unité de communication
acquiert les informations audio transmises depuis l'autre appareil par l'entremise du réseau, fournit les informations audio à l'unité de traitement de son d'entrée, et
transmet l'information de résultat de reconnaissance audio fournie en sortie de l'unité de traitement de sortie à l'autre dispositif par l'entremise du réseau.

13. Procédé de reconnaissance audio, comprenant les étapes suivantes :
acquisition d'informations audio obtenues par une parole d'un utilisateur et détection d'une caractéristique de la parole à partir des informations audio ;
détection d'une période de silence spécifique consistant en une période de silence courte spécifique qui n'est pas déterminée comme une période de silence lors d'un traitement de détection d'un segment de parole dans lequel les informations audio contiennent de l'audio ;
sélection d'un traitement de reconnaissance audio à réaliser sur les informations audio sur la base de la caractéristique de la parole qui a été détectée à partir des informations audio et de la période de silence spécifique qui a été détectée à partir des informations audio ; et
fourniture en sortie, conjointement avec un résultat de reconnaissance audio obtenu par une reconnaissance dans le traitement de reconnaissance audio qui a été sélectionné, d'une information de résultat de reconnaissance audio indiquant le traitement de reconnaissance audio dans lequel le résultat de reconnaissance audio a été obtenu.

14. Programme amenant un ordinateur à exécuter une reconnaissance audio comprenant les étapes suivantes :
acquisition d'informations audio obtenues par une parole d'un utilisateur et détection d'une caractéristique de la parole à partir des informations audio ;
détection d'une période de silence spécifique consistant en une période de silence courte spécifique qui n'est pas déterminée comme une période de silence lors d'un traitement de détection d'un segment de parole dans lequel les informations audio contiennent de l'audio ;
sélection d'un traitement de reconnaissance audio à réaliser sur les informations audio sur la base de la caractéristique de la parole qui a été détectée à partir des informations audio et de la période de silence spécifique qui a été détectée à partir des informations audio ; et
fourniture en sortie, conjointement avec un résultat de reconnaissance audio obtenu par une reconnaissance dans le traitement de reconnaissance audio qui a été sélectionné, d'une information de résultat de reconnaissance audio indiquant le traitement de reconnaissance audio dans lequel le résultat de reconnaissance audio a été obtenu.
